# EUROPÄISCHE PATENTSCHRIFT

(11) **EP 2 861 469 B1**
(45) Veröffentlichungstag und Bekanntmachung des Hinweises auf die Patenterteilung: **25.09.2019**
(21) Anmeldenummer: 13727886.7
(22) Anmeldetag: 07.06.2013
(51) Int. Cl.: B60S 1/38, B60S 1/40

(54) **WISCHBLATTADAPTERSYSTEM**
WIPER BLADE ADAPTER SYSTEM
SYSTÈME ADAPTATEUR DE BALAI D'ESSUIE-GLACE

(30) Priorität: 13.06.2012 DE 102012209867; 14.06.2012 DE 102012209960
(43) Veröffentlichungstag der Anmeldung: 22.04.2015
(73) Patentinhaber: Robert Bosch GmbH, 70442 Stuttgart (DE)
(72) Erfinder: DEPONDT, Helmut, B-3010 Kessel-Lo (BE)
(86) Internationale Anmeldenummer: PCT/EP2013/061801
(87) Internationale Veröffentlichungsnummer: WO 2013/186140

(56) Entgegenhaltungen:
- EP-A1- 1 847 425
- WO-A1-2013/098081
- DE-A1-102009 029 469
- DE-A1-102010 003 372
- DE-A1-102010 030 880
- FR-A1- 2 924 080

## Beschreibung

### Stand der Technik

Die Erfindung geht aus von einem Wischblattadaptersystem nach dem Oberbegriff des Patentanspruchs 1.

Es ist bereits ein Wischblattadaptersystem mit einer Wischblattadaptereinheit, die eine Kopplungseinheit aufweist, und mit zumindest zwei unterschiedlich geformten Verbindungseinheiten bekannt.

Weiterer Stand der Technik ist aus der gattungsbildenden FR 2 924 080 A1 sowie aus der DE 10 2009 029 469 A1 bekannt.

### Offenbarung der Erfindung

Die Erfindung geht aus von einem Wischblattadaptersystem mit einer Wischblattadaptereinheit, die eine Kopplungseinheit aufweist, und mit zumindest zwei unterschiedlich geformten Verbindungseinheiten.

Es wird vorgeschlagen, dass die Kopplungseinheit eine Seitensteckeinheit umfasst, die dazu vorgesehen ist, in einem Montagevorgang mit einer der zumindest zwei Verbindungseinheiten gekoppelt zu werden, wodurch eine besonders einfache Endmontage des Wischblattadaptersystems erreicht werden kann. Unter einer "Wischblattadaptereinheit" soll in diesem Zusammenhang insbesondere eine Einheit verstanden werden, die einen Kontaktbereich zu einem Verbindungselement aufweist und mit dem Verbindungselement unverlierbar verbindbar ist und ferner dazu vorgesehen ist, einen Kopplungsbereich eines Wischblattbauteils eines Wischblatts, wie insbesondere einer Federschiene, einer Wischleiste, eines Windabweiserelements und/oder einer Wischlippe, für eine Kopplung und/oder Kontaktierung mit dem Verbindungselement bereitzustellen. Unter "unterschiedlich geformt" soll in diesem Zusammenhang insbesondere verstanden werden, dass eine Ausformung eines Bauteils von einer Ausformung eines weiteren Bauteils abweicht. Unter einer "Verbindungseinheit" soll in diesem Zusammenhang insbesondere eine Einheit verstanden werden, die dazu vorgesehen ist, die Wischblattadaptereinheit mit einem Wischarm und/oder einem Wischarmadapter zu verbinden. Insbesondere ist die Verbindungseinheit dazu vorgesehen, einen Kopplungsbereich zur Kopplung eines Wischarms und/oder eines Wischarmadapters bereitzustellen. Insbesondere ist die Verbindungseinheit dazu vorgesehen, mit unterschiedlichen Bauarten von Wischarmadaptern gekoppelt zu werden. Unter "unterschiedlichen Bauarten von Wischarmadaptern" sollen in diesem Zusammenhang insbesondere verschiedene Wischarmadaptersysteme verstanden werden, die sich in ihrem Aufbau und/oder in ihrer Befestigungsfunktion unterscheiden. Bevorzugt handelt es sich um verschieden genormte Wischarmadaptersysteme. Unter einer ersten Bauart eines Wischarmadapters soll dabei in diesem Zusammenhang insbesondere ein Wischarmadapter verstanden werden, der einen Befestigungsstift und eine Auflageplatte aufweist. Unter einer weiteren möglichen Bauart eines Wischarmadapters soll dabei in diesem Zusammenhang insbesondere ein Wischarmadapter verstanden werden, der einen lang gestreckten hakenförmigen Grundkörper mit einer Biegung von 180° aufweist. Unter einer weiteren möglichen Bauart eines Wischarmadapters soll dabei in diesem Zusammenhang insbesondere ein Wischarmadapter verstanden werden, der zwei Rückanschläge und eine Befestigungsnase aufweist. Unter einer weiteren möglichen Bauart eines Wischarmadapters soll dabei in diesem Zusammenhang insbesondere ein Wischarmadapter verstanden werden, der eine Befestigungsausnehmung und einen Grundkörper mit einem s-förmigen Profil aufweist. Unter einer weiteren möglichen Bauart eines Wischarmadapters soll dabei in diesem Zusammenhang insbesondere ein Wischarmadapter verstanden werden, der eine Befestigungsausnehmung und Wandungen mit Befestigungsmitteln aufweist. Unter einer "Kopplungseinheit" soll dabei in diesem Zusammenhang insbesondere eine Einheit verstanden werden, die dazu vorgesehen ist, ein Wischblatt mit einem Wischarm zu koppeln. Unter einem "Koppeln" soll dabei in diesem Zusammenhang insbesondere ein kraft- und/oder formschlüssiges Verbinden verstanden werden. Unter einem "Montagevorgang" soll in diesem Zusammenhang insbesondere ein Vorgang verstanden werden, der von einem Endbenutzer beziehungsweise Endverbraucher durchgeführt wird, wobei bei dem Vorgang zumindest ein abschließender Montageschritt vorgenommen wird, durch den das Wischblattadaptersystem in einen Betriebszustand genommen werden kann. Unter einem "Endbenutzer" soll in diesem Zusammenhang insbesondere ein Endverbraucher und/oder eine Privatperson verstanden werden, der oder die gewöhnliche technische Fertigkeiten besitzt. Insbesondere weicht der Endbenutzer von einem Produktions- und/oder Werkstattmitarbeiter und/oder einer Person mit umfangreichen technischen Fertigkeiten und/oder einem Fachmann auf dem betreffenden technischen Gebiet ab. Weiterhin vorteilhaft erfolgt eine Montage durch den Endbenutzer werkzeuglos. Unter einer "Seitensteckeinheit" soll in diesem Zusammenhang insbesondere eine Einheit verstanden werden, die dazu vorgesehen ist, zumindest zwei Bauteile in einer translatorischen Bewegung zueinander in einen gekoppelten Zustand zu führen, wobei die Bewegung zumindest im Wesentlichen parallel zu einer Wischrichtung verläuft. Unter "zumindest im Wesentlichen" soll in diesem Zusammenhang insbesondere eine Abweichung von weniger als 30°, bevorzugt von weniger als 20°, ganz besonders bevorzugt von weniger als 10° verstanden werden. Unter einer "Wischrichtung" soll in diesem Zusammenhang insbesondere eine Richtung verstanden werden, in welche das Wischblattadaptersystem in einem Betriebszustand relativ zu einer Fahrzeugscheibe bewegt wird. Bei einer bogenförmigen oder anders gekrümmten Bewegungsrichtung des Wischblattadaptersystems entspricht die Wischrichtung einer Tangentialrichtung der Bewegungsrichtung. Die Wischrichtung ist insbesondere zumindest im Wesentlichen senkrecht zu einer Hauptlängserstreckung der Wischblattadaptereinheit ausgerichtet und zumindest im Wesentlichen senkrecht zu einer Vertikalrichtung ausgerichtet. Die Vertikalrichtung erstreckt sich zumindest im Wesentlichen senkrecht zu einer zu wischenden Fahrzeugoberfläche. Unter "vorgesehen" soll insbesondere speziell ausgelegt und/oder ausgestattet verstanden werden.

Nach der Erfindung wird vorgeschlagen, dass die Seitensteckeinheit ein Aufnahmeelement umfasst, das zur Aufnahme eines Steckelements einer der zumindest zwei Verbindungseinheiten vorgesehen ist, wodurch ein besonders einfacher Aufbau der Seitensteckeinheit erreicht werden kann. Unter einem "Aufnahmeelement" soll in diesem Zusammenhang insbesondere ein Element verstanden werden, das dazu vorgesehen ist, ein weiteres Bauteil zumindest formschlüssig aufzunehmen beziehungsweise zu koppeln. Unter einem "Steckelement" soll in diesem Zusammenhang insbesondere ein Element verstanden werden, das dazu vorgesehen ist, in ein weiteres Bauteil eingesteckt zu werden. Bevorzugt ist das Steckelement dazu vorgesehen, in das Aufnahmeelement gesteckt zu werden. Besonders bevorzugt liegt das Steckelement formschlüssig im Aufnahmeelement an. Ganz besonders bevorzugt ist das Steckelement im Wesentlichen zylinderförmig ausgebildet.

Ferner wird vorgeschlagen, dass das Aufnahmeelement einen Befestigungskanal umfasst, der zumindest im Wesentlichen parallel zu einer Wischrichtung verläuft, wodurch eine Befestigung der Verbindungseinheit in Wischrichtung besonders schnell und einfach erfolgen kann. Unter einem "Befestigungskanal" soll in diesem Zusammenhang insbesondere eine Längsausnehmung verstanden werden, die zu einer Lagerung eines zu befestigenden Bauteils vorgesehen ist.

Des Weiteren wird vorgeschlagen, dass der Befestigungskanal einen im Wesentlichen kreisrunden Querschnitt aufweist und dazu vorgesehen ist, eine der zumindest zwei Verbindungseinheiten schwenkbar zu lagern, wodurch eine Schwenklagerung der Verbindungseinheit auf besonders einfache Weise und unter Vermeidung zusätzlicher Bauteile erzielt werden kann.

Ist die Seitensteckeinheit dazu vorgesehen, mit einem der zumindest zwei Verbindungseinheiten lösbar gekoppelt zu werden, können die Verbindungseinheiten vorteilhaft nach Belieben getauscht werden. Unter "lösbar" soll in diesem Zusammenhang insbesondere zerstörungsfrei trennbar verstanden werden.

Vorteilhaft flexibel kann das Wischblattadaptersystem eingesetzt werden, wenn es zumindest drei unterschiedlich geformte Verbindungselemente aufweist, die zu einer Kopplung mit unterschiedlichen Bauarten von Wischarmadaptern vorgesehen sind.

In einer weiteren Ausgestaltung der Erfindung wird vorgeschlagen, dass die zumindest zwei unterschiedlich geformten Verbindungselemente zu einer Kopplung mit unterschiedlichen Bauarten von Wischarmadaptern vorgesehen sind, wodurch das Wischblattadaptersystem vorteilhaft besonders flexibel angewendet werden kann.

Des Weiteren wird vorgeschlagen, dass die Verbindungseinheiten ein Zwischenelement umfassen, das zu einer Kopplung mit der Wischblattadaptereinheit und einem Verbindungselement der Verbindungseinheit vorgesehen ist, wodurch vorteilhaft verschieden ausgeformte Verbindungselemente an der Wischblattadaptereinheit montiert werden können. Unter einem "Zwischenelement" soll in diesem Zusammenhang insbesondere ein Element verstanden werden, das dazu vorgesehen ist, einen Kopplungsbereich zu einem Wischblatt, einem Wischblattbauteil und/oder einer Wischblattadaptereinheit bereitzustellen. Bevorzugt ist das Zwischenelement getrennt vom Verbindungselement ausgebildet. Unter einem "Verbindungselement" soll in diesem Zusammenhang insbesondere ein Element verstanden werden, das dazu vorgesehen ist, einen Kontaktbereich und/oder Kopplungsbereich der Verbindungseinheit zur Kopplung eines Wischarms und/oder eines Wischarmadapters bereitzustellen.

Es wird weiterhin vorgeschlagen, dass das Zwischenelement ein Steckelement aufweist, das dazu vorgesehen ist, bei einem Montagevorgang in die Seitensteckeinheit eingeschoben zu werden, wodurch eine besonders leichte Montage des Zwischenelements an der Seitensteckeinheit erreicht werden kann. Bevorzugt weist das Steckelement einen gleichen Querschnitt auf wie ein Befestigungskanal der Seitensteckeinheit. Besonders bevorzugt ist das Steckelement zylinderförmig ausgebildet.

Nach der Erfindung wird vorgeschlagen, dass das Zwischenelement ein erstes Rastelement aufweist, das dazu vorgesehen ist, ein Lösen des Steckelements von der Seitensteckeinheit zu vermeiden, wodurch eine Befestigung des Zwischenelements an der Seitensteckeinheit besonders schnell und zuverlässig erfolgen kann. Unter einem "Rastelement" soll in diesem Zusammenhang insbesondere ein federelastisches Element zur Herstellung einer Rastverbindung verstanden werden, das dazu vorgesehen ist, bei einer Montage elastisch ausgelenkt zu werden.

Des Weiteren wird vorgeschlagen, dass das Zwischenelement ein zweites Rastelement aufweist, das dazu vorgesehen ist, in einem montierten Zustand ein Schwenken der Verbindungseinheit relativ zur Wischblattadaptereinheit zu vermeiden, wodurch ein Lösen der Verbindungseinheit von der Wischblattadaptereinheit vorteilhaft vermieden werden kann. Bevorzugt ist das zweite Rastelement am Zwischenelement angeordnet.

Ferner wird vorgeschlagen, dass zumindest eine Verbindungseinheit der zumindest zwei Verbindungseinheiten ein Zwischenelement, ein Verbindungselement und ein Abdeckteil umfasst, die getrennt voneinander ausgebildet und in einem montierten Zustand miteinander gekoppelt sind, wodurch besonders vielfältige Ausgestaltungsmöglichkeiten der Verbindungseinheit erzielt werden können.

Weist das Zwischenelement eine gekrümmte Lagerfläche auf, die dazu vorgesehen ist, das Verbindungselement in einem montierten Zustand schwenkbar zu lagern, kann eine besonders flexible Lagerung eines Wischblatts erreicht werden. Besonders vorteilhaft ist die Lagerfläche konvex gekrümmt, wodurch eine kompakte Lagerung mit einfachem Aufbau erzielt werden kann.

In einer weiteren Ausgestaltung der Erfindung wird vorgeschlagen, dass zumindest eine Verbindungseinheit der zumindest zwei Verbindungseinheiten ein Verbindungselement umfasst, das zumindest eine erste elastisch auslenkbare Seitenwandung aufweist, die zur Kopplung mit dem Zwischenelement vorgesehen ist, wodurch eine besonders schnelle und sichere Kopplung des Verbindungselements am Zwischenelement erzielt werden kann.

Umfasst zumindest die erste Seitenwandung eine Befestigungsausnehmung, in welche in einem montierten Zustand das Zwischenelement zumindest teilweise eingreift, kann eine besonders kompakte Lagerung des Verbindungselements am Zwischenelement erreicht werden. Bevorzugt ist die Befestigungsausnehmung von einer Bohrung gebildet. Besonders bevorzugt erstreckt sich die Befestigungsausnehmung in Vertikalrichtung. Es ist prinzipiell auch denkbar, weitere Befestigungsausnehmungen anzuordnen, in welche in einem montierten Zustand das Zwischenelement zumindest teilweise eingreift.

Umfasst zumindest eine Verbindungseinheit der zumindest zwei Verbindungseinheiten ein Verbindungselement, das eine Schräganschlagfläche aufweist, die dazu vorgesehen ist, eine Auslenkung einer Verbindungseinheit der zumindest zwei Verbindungseinheiten relativ zu einem Grundkörper der Wischblattadaptereinheit zu begrenzen, kann ein übermäßiges Schwenken des Verbindungselements relativ zum Grundkörper vorteilhaft vermieden werden. Bevorzugt ist die Schräganschlagfläche dem Wischblatt zugewandt. Besonders bevorzugt liegt zu einer Begrenzung einer Auslenkung der Verbindungseinheit die Schräganschlagfläche an der Wischblattadaptereinheit an.

Des Weiteren wird ein Verfahren vorgeschlagen, wobei eine Verbindungseinheit von einer Wischblattadaptereinheit gelöst wird, indem die Verbindungseinheit einseitig angehoben wird, wodurch eine besonders einfache Demontage durchgeführt werden kann.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: drei Verbindungselemente eines erfindungsgemäßen Wischblattadaptersystems und einen Wischarmadapter von verschiedenen Wischarmadaptersystemen in einer perspektivischen Ansicht,
- Fig. 2: eine Wischblattadaptereinheit des Wischblattadaptersystems aus Figur 1 in einer perspektivischen Ansicht,
- Fig. 3: das Wischblattadaptersystem aus den Figuren 1 und 2 in einer perspektivischen Ansicht,
- Fig. 4: das Wischblattadaptersystem aus der Figur 3 in einer perspektivischen Ansicht in einem montierten Zustand,
- Fig. 5: das Wischblattadaptersystem aus der Figur 4 in einem Montageschritt,
- Fig. 6: das Wischblattadaptersystem aus der Figur 4 in einem weiteren Montageschritt,
- Fig. 7: das Wischblattadaptersystem aus der Figur 4 in einem weiteren Montageschritt und
- Fig. 8: das Wischblattadaptersystem aus der Figur 4 in einem montierten Zustand.

### Beschreibung des Ausführungsbeispiels

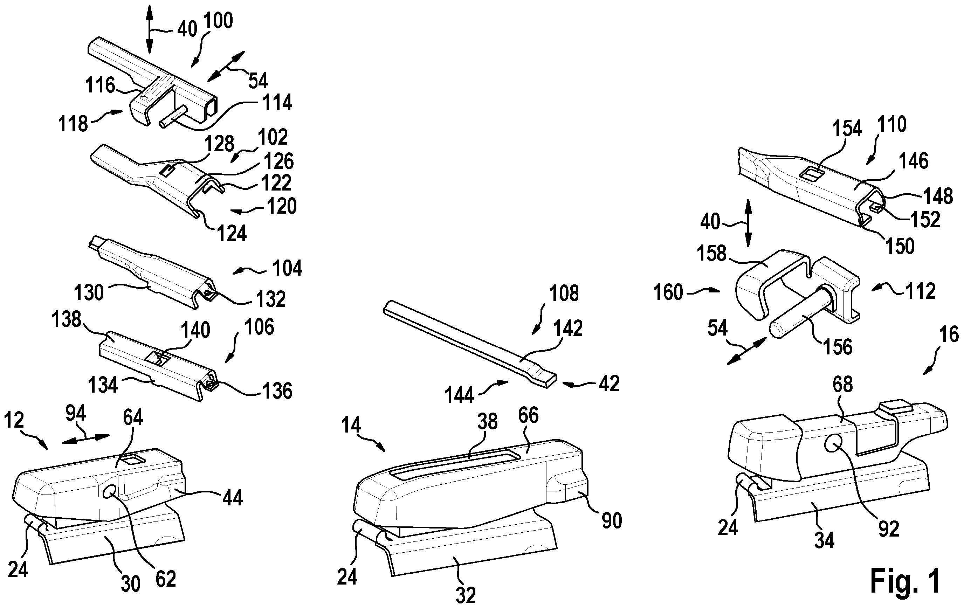

Figur 1 zeigt drei unterschiedlich geformte Verbindungseinheiten 12, 14, 16 eines erfindungsgemäßen Wischblattadaptersystems. Das Wischblattadaptersystem ist zur Kopplung verschiedener Wischarmadaptersysteme mit einem Wischblatt 58 und mit einer Wischleiste 60 vorgesehen. Dazu sind die drei unterschiedlich geformten Verbindungseinheiten 12, 14, 16 zu einer Kopplung mit unterschiedlichen Bauarten von Wischarmadaptern 100, 102, 104, 106, 108, 110, 112 vorgesehen. Die Wischarmadapter 100, 102, 104, 106, 108, 110, 112 der unterschiedlichen Wischarmadaptersysteme sind bereits aus dem Stand der Technik bekannt und zumindest teilweise genormt.

Die erste Verbindungseinheit 12 ist zur Kopplung mit vier unterschiedlich ausgeformten Wischarmadaptern 100, 102, 104, 106 vorgesehen. Der erste Wischarmadapter 100 weist dabei einen Befestigungsstift 114 und eine Auflageplatte 116 auf. Der Befestigungsstift 114 erstreckt sich parallel zu einer Wischrichtung 54 des Wischblattadaptersystems. Die Auflageplatte 116 erstreckt sich zunächst parallel zum Befestigungsstift 114 und knickt in einem Endbereich 118 um 90° in eine Vertikalrichtung 40 des Wischblattadaptersystems ab. Der zweite Wischarmadapter 102 weist einen U-förmigen Aufnahmebereich 120 auf, der von zwei parallel zueinander verlaufenden Seitenwandungen 122, 124 und einer Auflagewandung 126 aufgespannt ist. Die Auflagewandung 126 ist senkrecht zu den Seitenwandungen 122, 124 angeordnet. In der Auflagewandung 126 ist eine Positionierungsausnehmung 128 angeordnet, die zu einer definierten Positionierung des zweiten Wischarmadapters 102 an der Verbindungseinheit 12 vorgesehen ist. Der dritte Wischarmadapter 104 weist zwei Rückanschläge 130, die von Seitenwandungen gebildet sind, und eine Befestigungsnase 132 auf. Die Befestigungsnase 132 ist an einem freien Ende des dritten Wischarmadapters 104 als Fortsatz ausgebildet. Der vierte Wischarmadapter 106 weist zwei Rückanschläge 134, die von Seitenwandungen gebildet sind, und eine Befestigungsnase 136 auf. Die Befestigungsnase 136 ist an einem freien Ende des vierten Wischarmadapters 106 als Fortsatz ausgebildet. Ferner umfasst der vierte Wischarmadapter 106 eine Auflagewandung 138, in welcher eine Positionierungsausnehmung 140 angeordnet ist, die zu einer definierten Positionierung des vierten Wischarmadapters 106 an der ersten Verbindungseinheit 12 vorgesehen ist. Der erste Wischarmadapter 100, der zweite Wischarmadapter 102, der dritte Wischarmadapter 104 und der vierte Wischarmadapter 106 sind auf eine bekannte Art und Weise mit der ersten Verbindungseinheit 12 lösbar koppelbar.

Die zweite Verbindungseinheit 14 ist zur Kopplung mit einem fünften Wischarmadapter 108 vorgesehen, der eine weitere Bauart aufweist. Der fünfte Wischarmadapter 108 weist einen Befestigungsarm 142 auf, der in einem Endbereich 144 eine S-förmige Biegung aufweist. Der fünfte Wischarmadapter 108 ist auf eine bekannte Art und Weise mit der zweiten Verbindungseinheit 14 lösbar koppelbar.

Die dritte Verbindungseinheit 16 ist zur Kopplung mit einem sechsten Wischarmadapter 110 und einem siebten Wischarmadapter 112 vorgesehen, die jeweils in einer weiteren Bauweise ausgeformt sind. Der sechste Wischarmadapter 110 weist eine Grundwandung 146 auf, an welcher zwei Seitenwandungen 148, 150 angeordnet sind. Die Seitenwandungen 148, 150 schließen jeweils mit der Grundwandung 146 einen Winkel von 90° ein. An einem unteren Ende der jeweiligen Seitenwandung 148, 150 sind Befestigungsmittel 152 angeordnet, die wiederum einen Winkel von 90° zu den Seitenwandungen 148, 150 einschließen. In der Grundwandung 146 des Wischarmadapters 110 ist zusätzlich eine Befestigungsausnehmung 154 angeordnet. Der siebte Wischarmadapter 112 weist einen Befestigungsstift 156 und eine Auflageplatte 158 auf. Der Befestigungsstift 156 erstreckt sich parallel zu einer Wischrichtung 54 des Wischblattadaptersystems. Die Auflageplatte 158 erstreckt sich zunächst parallel zum Befestigungsstift 156 und knickt in einem Endbereich 160 um 90° in die Vertikalrichtung 40 ab. Der sechste Wischarmadapter 110 und der siebte Wischarmadapter 112 sind auf eine bekannte Art und Weise mit der dritten Verbindungseinheit 16 lösbar koppelbar.

Die erste Verbindungseinheit 12 weist eine Querausnehmung 62 auf, die zur Aufnahme des Befestigungsstifts 114 des Wischarmadapters 100 vorgesehen ist. Die erste Verbindungseinheit 12 weist eine Seitenausformung 44 auf. Die Seitenausformung 44 tritt aus einer Wandung der ersten Verbindungseinheit 12 heraus und bildet einen Griffbereich für einen Benutzer. Die Querausnehmung 62 weist einen kreisrunden Querschnitt auf.

Die zweite Verbindungseinheit 14 weist eine Längsausnehmung 38 auf, welche die Verbindungseinheit 14 in Vertikalrichtung 40 hin öffnet und die zur Aufnahme eines Wischarmadapterendbereichs 42 vorgesehen ist. Die zweite Verbindungseinheit 14 weist eine Seitenausformung 90 auf. Die Seitenausformung 90 tritt aus einer Wandung der zweiten Verbindungseinheit 14 heraus und bildet einen Griffbereich für einen Benutzer.

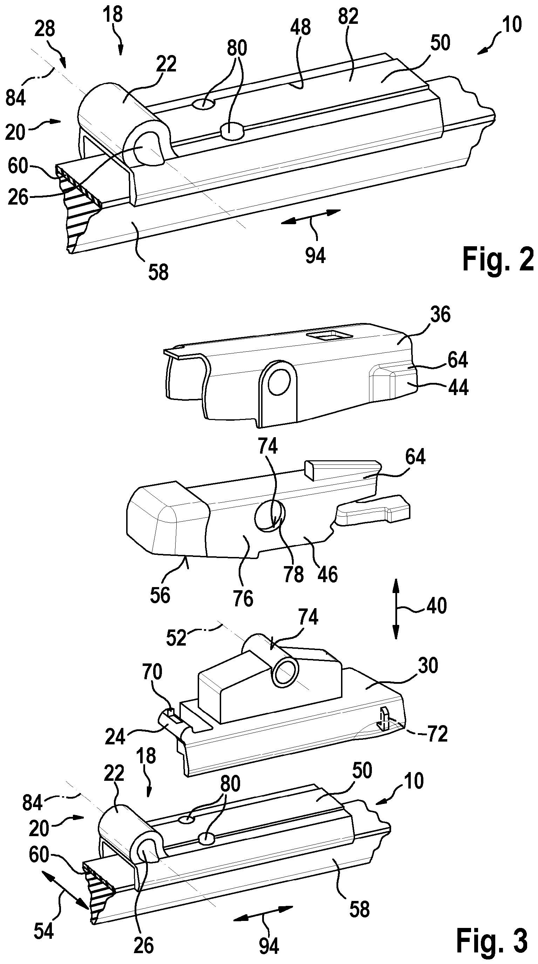

Die dritte Verbindungseinheit 16 weist eine Querausnehmung 92 auf, die zur Aufnahme des Befestigungsstifts 156 des Wischarmadapters 112 vorgesehen ist. Die Wischarmadapter 100, 102, 104, 106, 108, 110, 112 sind in den nachfolgenden Figuren aus Gründen der Übersichtlichkeit nicht weiter dargestellt. Das Wischblattadaptersystem weist ferner eine Wischblattadaptereinheit 10 auf, wie in Figur 2 gezeigt. Die Wischblattadaptereinheit 10 umfasst eine Kopplungseinheit 18, die dazu vorgesehen ist, in einem Montagevorgang von einem Endbenutzer mit einer der drei Verbindungseinheiten 12, 14, 16 gekoppelt zu werden. Die Wischblattadaptereinheit 10 weist dazu einen Kontaktbereich zu einer der drei Verbindungseinheiten 12, 14, 16 auf.

In einem montierten Zustand ist die Wischblattadaptereinheit 10 mit einer der drei Verbindungseinheiten 12, 14, 16 unverlierbar verbunden. Zur Kopplung mit dem Wischblatt 58 weist die Wischblattadaptereinheit 10 zwei Befestigungsausnehmungen 80 auf, die in einer Grundplatte 82 angeordnet sind. Die Befestigungsausnehmungen 80 sind von Bohrungen gebildet, die sich in Vertikalrichtung 40 erstrecken.

Die Kopplungseinheit 18 ist dazu vorgesehen, mit einer der drei Verbindungseinheiten 12, 14, 16 lösbar gekoppelt zu werden. In anderen Worten lässt sich eine mit der Kopplungseinheit 18 gekoppelte Verbindungseinheit 12, 14, 16 von der Kopplungseinheit 18 wieder zerstörungsfrei trennen. Dazu umfasst die Kopplungseinheit 18 eine Seitensteckeinheit 20, die dazu vorgesehen ist, in einem Montagevorgang mit einer der drei Verbindungseinheiten 12, 14, 16 gekoppelt zu werden.

Die Seitensteckeinheit 20 ist dazu vorgesehen, mit einer der drei Verbindungseinheiten 12, 14, 16 lösbar gekoppelt zu werden. Die Seitensteckeinheit 20 ist ferner dazu vorgesehen, die Wischblattadaptereinheit 10 und die Verbindungseinheit 12, 14, 16 in einer translatorischen Bewegung zueinander in einen gekoppelten Zustand zu führen, wobei die Bewegung parallel zur Wischrichtung 54 verläuft. Dazu umfasst die Seitensteckeinheit 20 ein Aufnahmeelement 22, das zur Aufnahme eines Steckelements 24 eines Zwischenelements 30 von einer der drei Verbindungseinheiten 12, 14, 16 vorgesehen ist.

Das Aufnahmeelement 22 ist dazu vorgesehen, das Steckelement 24 zumindest formschlüssig aufzunehmen beziehungsweise zu koppeln. Das Aufnahmeelement 22 ist in einem Endbereich 28 der Wischblattadaptereinheit 10 angeordnet, der sich, in einer Längsrichtung 94 von einem freien Ende der Wischblattadaptereinheit 10 betrachtet, zehn Millimeter weit erstreckt. Die Längsrichtung 94 erstreckt sich im Wesentlichen parallel zu einer Längserstreckung der Wischblattadaptereinheit 10. Die Längserstreckung ist dabei eine größtmögliche Erstreckung der Wischblattadaptereinheit 10.

Das Steckelement 24 ist zylinderförmig ausgebildet. Somit weist das Steckelement 24 einen kreisrunden Querschnitt auf. Das Steckelement 24 ist dazu vorgesehen, bei einem Montagevorgang in die Seitensteckeinheit 20 eingeschoben zu werden. Dafür ist das Steckelement 24 dazu vorgesehen, in das Aufnahmeelement 22 gesteckt zu werden. In einem montierten Zustand liegt das Steckelement 24 formschlüssig im Aufnahmeelement 22 an.

Das Aufnahmeelement 22 umfasst einen Befestigungskanal 26, der parallel zur Wischrichtung 54 verläuft. Der Befestigungskanal 26 ist zu einer Lagerung des Steckelements 24 vorgesehen. Der Befestigungskanal 26 weist einen im Wesentlichen kreisrunden Querschnitt auf und ist dazu vorgesehen, eine der drei Verbindungseinheiten 12, 14, 16 schwenkbar zu lagern. Ein Durchmesser des Befestigungskanals 26 entspricht einem Durchmesser des Steckelements 24. Der Befestigungskanal 26 ist in Wischrichtung 54 hin geöffnet. Ferner verläuft der Befestigungskanal 26 teilweise in einer Auflagewandung 48 eines Grundkörpers 50 der Wischblattadaptereinheit 10. Die Auflagewandung 48 erstreckt sich im Wesentlichen parallel zu einer zu wischenden Oberfläche.

Das Zwischenelement 30 der Verbindungseinheiten 12, 14, 16 ist zu einer Kopplung mit der Wischblattadaptereinheit 10 vorgesehen ist. Jede Verbindungseinheit 12, 14, 16 weist zudem ein Verbindungselement 64, 66, 68 auf. Das Zwischenelement 30 ist zu einer Kopplung mit einem der Verbindungselemente 64, 66, 68 vorgesehen. Das Zwischenelement 30 ist getrennt vom Verbindungselement 64, 66, 68 ausgebildet.

In den Figuren 3 bis 7 ist beispielhaft ein Montagevorgang der ersten Verbindungseinheit 12 mit der Wischblattadaptereinheit 10 gezeigt. Der prinzipielle Montagevorgang mit der Wischblattadaptereinheit 10 beschränkt sich jedoch nicht auf die erste Verbindungseinheit 12, sonders kann analog auf die zweite und dritte Verbindungseinheit 14, 16 übertragen werden.

Figur 3 zeigt das Wischblattadaptersystem vor einem Montagevorgang. Das Verbindungselement 64 ist zweiteilig ausgebildet. Ein Abdeckteil 36 des Verbindungselements 64 wird bei einem Montagevorgang mit einem Basisteil 46 gekoppelt. Das Abdeckteil 36 ist dabei dazu vorgesehen, einen Kontaktbereich zur Kopplung von zumindest einem Wischarmadaptersystem bereitzustellen. Es ist in diesem Zusammenhang jedoch auch denkbar, das Verbindungselement 64 einteilig auszubilden. Die Seitenausformung 44 ist am Abdeckteil 36 angeordnet und bildet einen Griffbereich für einen Benutzer.

Das Zwischenelement 30 weist ein erstes Rastelement 70 auf, das dazu vorgesehen ist, ein Lösen des Steckelements 24 von der Seitensteckeinheit 20 in einem montierten Zustand zu vermeiden. Dazu ist das erste Rastelement 70 an einem freien Ende des Steckelements 24 angeordnet. Das Steckelement 24 weist hierzu eine nutförmige Ausnehmung auf, über die sich das erste Rastelement 70 erstreckt.

Das erste Rastelement 70 weist an einem freien Ende eine Auswölbung auf, die in einem montierten Zustand in eine nicht näher dargestellte Ausnehmung des Aufnahmeelements 22 eingreift. Es ist in diesem Zusammenhang jedoch auch denkbar, das erste Rastelement 70 an einer anderen Position anzuordnen, so dass eine Bewegung des Zwischenelements 30 relativ zur Wischblattadaptereinheit 10 vermieden wird.

Die Verbindungseinheit 12 weist ferner ein zweites Rastelement 72 auf, das dazu vorgesehen ist, in einem montierten Zustand ein Schwenken der Verbindungseinheit 12 relativ zur Wischblattadaptereinheit 10 zu vermeiden. Das zweite Rastelement 72 ist dazu am Zwischenelement 30 angeordnet. Das zweite Rastelement 72 ist dabei an einem, in Längsrichtung 94 betrachtet, dem ersten Rastelement 70 gegenüberliegendem Endbereich des Zwischenelements 30 angeordnet.

Das Zwischenelement 30, das Verbindungselement 64 und das Abdeckteil 36 sind getrennt voneinander ausgebildet und in einem montierten Zustand miteinander gekoppelt. Das Zwischenelement 30 weist eine gekrümmte Lagerfläche 74 auf, die dazu vorgesehen ist, das Verbindungselement 64 in einem montierten Zustand um eine Schwenkachse 52 schwenkbar zu lagern. Die Lagerfläche 74 ist dabei konvex gekrümmt.

Das Verbindungselement 64 weist eine erste, elastisch auslenkbare Seitenwandung 76 auf, die zur Kopplung mit dem Zwischenelement 30 vorgesehen ist. Ferner weist das Verbindungselement 64 eine zweite, rückwärtig angeordnete, nicht näher dargestellte, elastisch auslenkbare Seitenwandung auf, die zur Kopplung mit dem Zwischenelement 30 vorgesehen ist. Die zweite Seitenwandung ist dabei baugleich mit der ersten Seitenwandung 76.

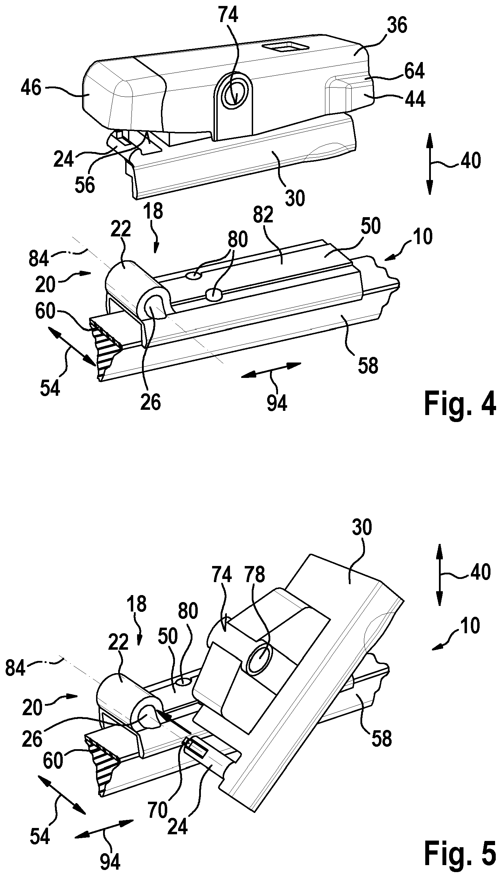

Die erste Seitenwandung 76 umfasst eine Befestigungsausnehmung 78, in welche in einem montierten Zustand das Zwischenelement 30 eingreift. Die Lagerfläche 74 des Zwischenelements 30 liegt dabei an einer die Befestigungsausnehmung 78 begrenzenden Fläche der Seitenwandung 76 an. Bei einem Aufsetzen des Verbindungselements 64 auf das Zwischenelement 30 werden die erste und zweite Seitenwandung 76 vom Zwischenelement 30 zunächst ausgelenkt und verrasten dann an der Lagerfläche 74 (Figur 4).

Das Verbindungselement 64 weist eine Schräganschlagfläche 56 auf, die dazu vorgesehen ist, eine Auslenkung der Verbindungseinheit 12 relativ zum Grundkörper 50 der Wischblattadaptereinheit 10 zu begrenzen. Die Schräganschlagfläche 56 ist dabei dem Wischblatt 58 zugewandt. Zu einer Begrenzung einer Auslenkung liegt die Schräganschlagfläche 56 am Grundkörper 50 an.

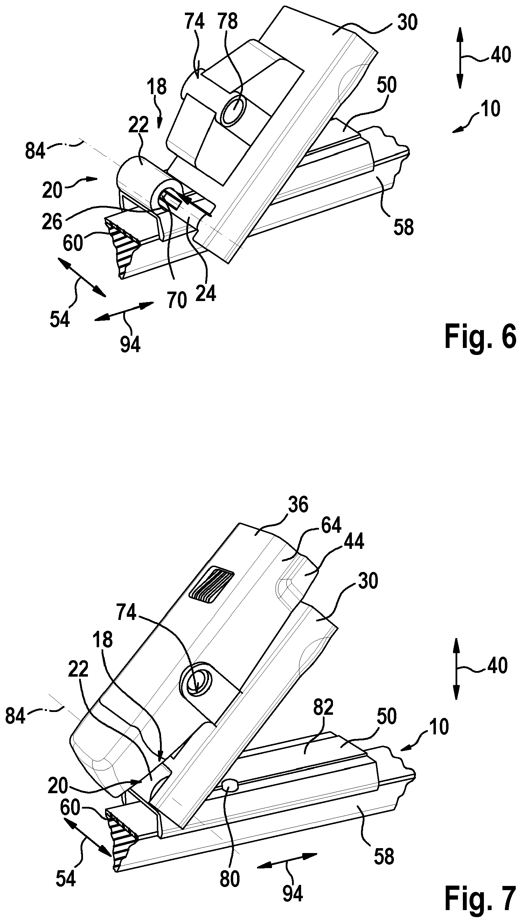

In den Figuren 5 und 6 ist ein weiterer Montageschritt des Wischblattadaptersystems gezeigt. Das Verbindungselement 64 ist aus Gründen der Übersichtlichkeit nicht dargestellt. Das Steckelement 24 wird dabei in das Aufnahmeelement 22 der Seitensteckeinheit 20 eingeschoben. Das Rastelement 70 wird dabei zunächst ausgelenkt und rastet anschließend in eine nicht näher dargestellte Rastausnehmung im Aufnahmeelement 22 ein.

In Figur 7 ist ein letzter Montageschritt des Wischblattadaptersystems gezeigt. Die Verbindungseinheit 12 wird um eine Schwenkachse 84, die koaxial zum Befestigungskanal 26 verläuft, geschwenkt. Zuletzt liegt die Verbindungseinheit 12 auf der Grundplatte 82 der Wischblattadaptereinheit 10 an. Das zweite Rastelement 72 wird bei dem Montageschritt vom Grundkörper 50 ausgelenkt und rastet schließlich in eine nicht näher dargestellte Rastausnehmung im Grundkörper 50 ein. Ein Zurückschwenken der Verbindungseinheit 12 wird somit vermieden.

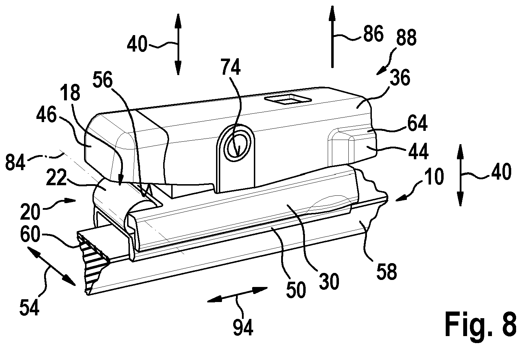

In Figur 8 ist das Wischblattadaptersystem in einem montierten Zustand gezeigt. Bei einer Demontage wird die Verbindungseinheit 12 von der Wischblattadaptereinheit 10 gelöst, indem die Verbindungseinheit 12 einseitig angehoben wird. Dazu wird, insbesondere durch einen Endbenutzer, in einem Anhebebereich 88 eine Anhebekraft 86 auf die Verbindungseinheit 12 ausgeübt. Die Anhebekraft 86 verläuft parallel zur Vertikalrichtung 40. Ferner zeigt die Anhebekraft 86 vom Wischblatt 58 weg.

Der Anhebebereich 88 ist, in Längsrichtung 94 betrachtet, an einem freien Ende der Verbindungseinheit 12 angeordnet. Die Seitenausformung 44 ist ebenfalls im Anhebebereich 88 angeordnet und bildet einen Griff zum Anheben der Verbindungseinheit 12. Durch die Anhebekraft 86 wird zunächst das zweite Rastelement 72 aus seiner Verrastung gelöst. Anschließend kann die Verbindungseinheit 12 um die Schwenkachse 84 geschwenkt werden. Durch Ziehen an der Verbindungseinheit 12 in Wischrichtung 54 wird das erste Rastelement 70 aus seiner Verrastung gelöst. Nach einem Demontagevorgang kann die erste Verbindungseinheit 12 gegen die zweite oder dritte Verbindungseinheit 14, 16 getauscht werden. Die zweite und dritte Verbindungseinheit 14, 16 können auf eine gleiche Art wie die erste Verbindungseinheit 12 an der Wischblattadaptereinheit 10 montiert werden.

## Patentansprüche

1. Wischblattadaptersystem mit einer Wischblattadaptereinheit (10), die eine Kopplungseinheit (18) aufweist, und mit zumindest zwei unterschiedlich geformten Verbindungseinheiten (12, 14, 16), wobei die Kopplungseinheit (18) eine Seitensteckeinheit (20) umfasst, die dazu vorgesehen ist, in einem Montagevorgang mit einer der zumindest zwei Verbindungseinheiten (12, 14, 16) gekoppelt zu werden, wobei die Seitensteckeinheit (20) ein Aufnahmeelement (22) umfasst, das zur Aufnahme eines Steckelements (24) einer der zumindest zwei Verbindungseinheiten (12, 14, 16) vorgesehen ist, wobei das Aufnahmeelement (22) einen Befestigungskanal (26) umfasst, der zumindest im Wesentlichen parallel zu einer Wischrichtung (54) verläuft, **dadurch gekennzeichnet,**
- **dass** der Befestigungskanal (26) einen im Wesentlichen kreisrunden Querschnitt aufweist und dazu vorgesehen ist, eine der zumindest zwei Verbindungseinheiten (12, 14, 16) schwenkbar zu lagern,
- **dass** die Verbindungseinheiten (12, 14, 16) ein Zwischenelement (30, 32, 34) umfassen, das zu einer Kopplung mit der Wischblattadaptereinheit (10) und einem Verbindungselement (64, 66, 68) der Verbindungseinheit (12, 14, 16) vorgesehen ist,
- **dass** das Zwischenelement (30, 32, 34) ein Steckelement (24) aufweist, das dazu vorgesehen ist, bei einem Montagevorgang in die Seitensteckeinheit (20) eingeschoben zu werden,
- **dass** das Zwischenelement (30, 32, 34) ein erstes Rastelement (70) aufweist, das dazu vorgesehen ist, ein Lösen des Steckelements (24) von der Seitensteckeinheit (20) zu vermeiden und
- **dass** das Zwischenelement (30, 32, 34) ein zweites Rastelement (72) aufweist, das dazu vorgesehen ist, in einem montierten Zustand ein Schwenken der Verbindungseinheit (12, 14, 16) relativ zur Wischblattadaptereinheit (10) zu vermeiden.

2. Wischblattadaptersystem nach einem der vorhergehenden Ansprüche, **dadurch gekennzeichnet, dass** die Seitensteckeinheit (20) dazu vorgesehen ist, mit einem der zumindest zwei Verbindungseinheiten (12, 14, 16) lösbar gekoppelt zu werden.

3. Wischblattadaptersystem nach einem der vorhergehenden Ansprüche, **gekennzeichnet durch** zumindest drei unterschiedlich geformte Verbindungseinheiten (12, 14, 16), die zu einer Kopplung mit unterschiedlichen Bauarten von Wischarmadaptern (100, 102, 104, 106, 108, 110, 112) vorgesehen sind.

4. Wischblattadaptersystem nach einem der vorhergehenden Ansprüche, **dadurch gekennzeichnet, dass** die zumindest zwei unterschiedlich geformten Verbindungseinheiten (12, 14, 16) zu einer Kopplung mit unterschiedlichen Bauarten von Wischarmadaptern (100, 102, 104, 106, 108, 110, 112) vorgesehen sind.

5. Wischblattadaptersystem nach einem der vorhergehenden Ansprüche, **dadurch gekennzeichnet, dass** zumindest eine Verbindungseinheit (12, 14, 16) der zumindest zwei Verbindungseinheiten (12, 14, 16) ein Zwischenelement (30, 32, 34), ein Verbindungselement (64, 66, 68) und ein Abdeckteil (36) umfasst, die getrennt voneinander ausgebildet und in einem montierten Zustand miteinander gekoppelt sind.

6. Wischblattadaptersystem zumindest nach einem der vorhergehenden Ansprüche, **dadurch gekennzeichnet, dass** das Zwischenelement (30, 32, 34) eine gekrümmte Lagerfläche (74) aufweist, die dazu vorgesehen ist, das Verbindungselement (64, 66, 68) in einem montierten Zustand schwenkbar zu lagern.

7. Wischblattadaptersystem nach Anspruch 6, **dadurch gekennzeichnet, dass** die Lagerfläche (74) konvex gekrümmt ist.

8. Wischblattadaptersystem zumindest nach einem der vorhergehenden Ansprüche, **dadurch gekennzeichnet, dass** zumindest eine Verbindungseinheit (12, 14, 16) der zumindest zwei Verbindungseinheiten (12, 14, 16) ein Verbindungselement (64, 66, 68) umfasst, das zumindest eine erste elastisch auslenkbare Seitenwandung (76) aufweist, die zur Kopplung mit dem Zwischenelement (30, 32, 34) vorgesehen ist.

9. Wischblattadaptersystem zumindest nach einem der vorhergehenden Ansprüche, **dadurch gekennzeichnet, dass** zumindest die erste Seitenwandung (76) eine Befestigungsausnehmung (78, 80) umfasst, in welche in einem montierten Zustand das Zwischenelement (30, 32, 34) zumindest teilweise eingreift.

10. Wischblattadaptersystem nach einem der vorhergehenden Ansprüche, **dadurch gekennzeichnet, dass** zumindest eine Verbindungseinheit (12, 14, 16) der zumindest zwei Verbindungseinheiten (12, 14, 16) ein Verbindungselement (64, 66, 68) umfasst, das eine Schräganschlagfläche (56) aufweist, die dazu vorgesehen ist, eine Auslenkung einer Verbindungseinheit (12, 14, 16) der zumindest zwei Verbindungseinheiten (12, 14, 16) relativ zu einem Grundkörper (50) der Wischblattadaptereinheit (10) zu begrenzen.

11. Wischblatt (58) mit einem Wischblattadaptersystem nach einem der vorhergehenden Ansprüche.

12. Verfahren zur Montage eines Wischblattadaptersystems nach einem der Ansprüche 1 bis 10.

13. Verfahren zur Demontage eines Wischblattadaptersystems nach einem der Ansprüche 1 bis 10.

14. Verfahren nach Anspruch 13, **dadurch gekennzeichnet, dass** eine Verbindungseinheit (12, 14, 16) von einer Wischblattadaptereinheit (10) gelöst wird, indem die Verbindungseinheit (12, 14, 16) einseitig angehoben wird.

## Claims

1. Wiper blade adapter system with a wiper blade adapter unit (10), which has a coupling unit (18), and with at least two differently shaped connection units (12, 14, 16), wherein the coupling unit (18) comprises a side plug-in unit (20), which is provided to be coupled in an installation operation to one of the at least two connection units (12, 14, 16), wherein the side plug-in unit (20) comprises a receiving element (22), which is provided for receiving a plug-in element (24) of one of the at least two connection units (12, 14, 16), wherein the receiving element (22) comprises a fastening channel (26), which runs at least substantially parallel to a wiping direction (54), **characterized**
- **in that** the fastening channel (26) has a substantially circular cross section and is provided for pivotably supporting one of the at least two connection units (12, 14, 16),
- **in that** the connection units (12, 14, 16) comprise an intermediate element (30, 32, 34), which is provided for coupling to the wiper blade adapter unit (10) and to a connection element (64, 66, 68) of the connection unit (12, 14, 16),
- **in that** the intermediate element (30, 32, 34) has a plug-in element (24), which is provided to be pushed into the side plug-in unit (20) during an installation operation,
- **in that** the intermediate element (30, 32, 34) has a first latching element (70), which is provided to avoid the plug-in element (24) being detached from the side plug-in unit (20), and
- **in that** the intermediate element (30, 32, 34) has a second latching element (72), which is provided, in a fitted state, to avoid pivoting of the connection unit (12, 14, 16) relative to the wiper blade adapter unit (10).

2. Wiper blade adapter system according to one of the preceding claims, **characterized in that** the side plug-in unit (20) is provided to be coupled detachably to one of the at least two connection units (12, 14, 16).

3. Wiper blade adapter system according to either of the preceding claims, **characterized by** at least three differently shaped connection units (12, 14, 16), which are provided for coupling to different designs of wiper arm adapters (100, 102, 104, 106, 108, 110, 112).

4. Wiper blade adapter system according to one of the preceding claims, **characterized in that** the at least two differently shaped connection units (12, 14, 16) are provided for coupling to different designs of wiper arm adapters (100, 102, 104, 106, 108, 110, 112).

5. Wiper blade adapter system according to one of the preceding claims, **characterized in that** at least one connection unit (12, 14, 16) of the at least two connection units (12, 14, 16) comprises an intermediate element (30, 32, 34), a connection element (64, 66, 68) and a covering part (36), which are formed separately from one another and, in a fitted state, are coupled to one another.

6. Wiper blade adapter system at least according to one of the preceding claims, **characterized in that** the intermediate element (30, 32, 34) has a curved bearing surface (74), which is provided for pivotably supporting the connection element (64, 66, 68) in a fitted state.

7. Wiper blade adapter system according to Claim 6, **characterized in that** the bearing surface (74) is curved convexly.

8. Wiper blade adapter system at least according to one of the preceding claims, **characterized in that** at least one connection unit (12, 14, 16) of the at least two connection units (12, 14, 16) comprises a connection element (64, 66, 68), which has at least one first elastically deflectable side wall (76), which is provided for coupling to the intermediate element (30, 32, 34).

9. Wiper blade adapter system at least according to one of the preceding claims, **characterized in that** at least the first side wall (76) comprises a fastening recess (78, 80), in which the intermediate element (30, 32, 34) at least partially engages in a fitted state.

10. Wiper blade adapter system according to one of the preceding claims, **characterized in that** at least one connection unit (12, 14, 16) of the at least two connection units (12, 14, 16) comprises a connection element (64, 66, 68), which has an oblique stop surface (56), which is provided for limiting a deflection of one connection unit (12, 14, 16) of the at least two connection units (12, 14, 16) relative to a basic body (50) of the wiper blade adapter unit (10).

11. Wiper blade (58) with a wiper blade adapter system according to one of the preceding claims.

12. Method for installing a wiper blade adapter system according to one of Claims 1 to 10.

13. Method for removing a wiper blade adapter system according to one of Claims 1 to 10.

14. Method according to Claim 13, **characterized in that** a connection unit (12, 14, 16) is detached from a wiper blade adapter unit (10) by the connection unit (12, 14, 16) being raised on one side.

## Revendications

1. Système d'adaptateur de balai d'essuie-glace comprenant une unité d'adaptateur de balai d'essuie-glace (10) qui présente une unité d'accouplement (18) et comprenant au moins deux unités de liaison (12, 14, 16) de formes différentes, l'unité d'accouplement (18) comprenant une unité d'enfichage latéral (20) qui est prévue pour être accouplée, dans une opération de montage, à l'une des au moins deux unités de liaison (12, 14, 16), l'unité d'enfichage latéral (20) comprenant un élément de réception (22) qui est prévu pour recevoir un élément d'enfichage (24) de l'une des au moins deux unités de liaison (12, 14, 16), l'élément de réception (22) comprenant un canal de fixation (26) qui s'étend au moins essentiellement parallèlement à une direction de balayage (54),
**caractérisé en ce que**
- le canal de fixation (26) présente une section transversale essentiellement circulaire et est prévu pour supporter de manière pivotante l'une des au moins deux unités de liaison (12, 14, 16),
- les unités de liaison (12, 14, 16) comprennent un élément intermédiaire (30, 32, 34) qui est prévu pour s'accoupler avec l'unité d'adaptateur de balai d'essuie-glace (10) et avec un élément de liaison (64, 66, 68) de l'unité de liaison (12, 14, 16),
- l'élément intermédiaire (30, 32, 34) présente un élément d'enfichage (24) qui est prévu pour être enfoncé dans l'unité d'enfichage latéral (20) lors d'une opération de montage,
- l'élément intermédiaire (30, 32, 34) présente un premier élément d'encliquetage (70) qui est prévu pour empêcher que l'élément d'enfichage (24) ne ressorte de l'unité d'enfichage latéral (20) et
- l'élément intermédiaire (30, 32, 34) présente un deuxième élément d'encliquetage (72) qui est prévu pour empêcher, dans un état monté, un pivotement de l'unité de liaison (12, 14, 16) par rapport à l'unité d'adaptateur de balai d'essuie-glace (10).

2. Système d'adaptateur de balai d'essuie-glace selon l'une quelconque des revendications précédentes, **caractérisé en ce que** l'unité d'enfichage latéral (20) est prévue pour être accouplée de manière détachable à l'une des au moins deux unités de liaison (12, 14, 16).

3. Système d'adaptateur de balai d'essuie-glace selon l'une quelconque des revendications précédentes, **caractérisé par** au moins trois unités de liaison (12, 14, 16) de formes différentes, qui sont prévues pour être accouplées à différents types d'adaptateurs de bras d'essuie-glace (100, 102, 104, 106, 108, 110, 112).

4. Système d'adaptateur de balai d'essuie-glace selon l'une quelconque des revendications précédentes, **caractérisé en ce que** les au moins deux unités de liaison (12, 14, 16) de formes différentes sont prévues pour être accouplées à différents types d'adaptateurs de bras d'essuie-glace (100, 102, 104, 106, 108, 110, 112).

5. Système d'adaptateur de balai d'essuie-glace selon l'une quelconque des revendications précédentes, **caractérisé en ce qu'**au moins une unité de liaison (12, 14, 16) des au moins deux unités de liaison (12, 14, 16) comprend un élément intermédiaire (30, 32, 34), un élément de liaison (64, 66, 68) et une partie de recouvrement (36) qui sont réalisés séparément les uns des autres et qui sont accouplés les uns aux autres dans un état monté.

6. Système d'adaptateur de balai d'essuie-glace selon l'une quelconque des revendications précédentes, **caractérisé en ce que** l'élément intermédiaire (30, 32, 34) présente une surface de palier courbe (74) qui est prévue pour supporter de manière pivotante l'élément de liaison (64, 66, 68) dans un état monté.

7. Système d'adaptateur de balai d'essuie-glace selon la revendication 6, **caractérisé en ce que** la surface de palier (74) présente une courbure convexe.

8. Système d'adaptateur de balai d'essuie-glace selon au moins l'une quelconque des revendications précédentes, **caractérisé en ce qu'**au moins une unité de liaison (12, 14, 16) des au moins deux unités de liaison (12, 14, 16) comprend un élément de liaison (64, 66, 68) qui présente au moins une première paroi latérale pouvant être déviée élastiquement (76) qui est prévue pour s'accoupler avec l'élément intermédiaire (30, 32, 34).

9. Système d'adaptateur de balai d'essuie-glace selon au moins l'une quelconque des revendications précédentes, **caractérisé en ce qu'**au moins la première paroi latérale (76) comprend un évidement de fixation (78, 80) dans lequel s'engage au moins en partie, dans un état monté, l'élément intermédiaire (30, 32, 34).

10. Système d'adaptateur de balai d'essuie-glace selon l'une quelconque des revendications précédentes, **caractérisé en ce qu'**au moins une unité de liaison (12, 14, 16) des au moins deux unités de liaison (12, 14 16) comprend un élément de liaison (64, 66, 68) qui présente une surface de butée oblique (56) qui est prévue pour limiter une déviation d'une unité de liaison (12, 14, 16) des au moins deux unités de liaison (12, 14 16) par rapport à un corps de base (50) de l'unité d'adaptateur de balai d'essuie-glace (10).

11. Balai d'essuie-glace (58) comprenant un système d'adaptateur de balai d'essuie-glace selon l'une quelconque des revendications précédentes.

12. Procédé de montage d'un système d'adaptateur de balai d'essuie-glace selon l'une quelconque des revendications 1 à 10.

13. Procédé de démontage d'un système d'adaptateur de balai d'essuie-glace selon l'une quelconque des revendications 1 à 10.

14. Procédé selon la revendication 13, **caractérisé en ce que** l'unité de liaison (12, 14 16) est desserrée par une unité d'adaptateur de balai d'essuie-glace (10) en soulevant d'un côté l'unité de liaison (12, 14, 16).
